# EUROPEAN PATENT APPLICATION

(11) **EP 4 331 418 A1**
(43) Date of publication of application: **06.03.2024**
(21) Application number: 21939240.4
(22) Date of filing: 28.04.2021
(51) Int. Cl.: A24F 40/65

(54) **ELECTRONIC DEVICE AND METHOD FOR CONTROLLING ELECTRONIC DEVICE**

(71) Applicant: Japan Tobacco Inc., Tokyo 105-6927 (JP)
(72) Inventor: NAGAHAMA, Toru, Tokyo 130-8603 (JP); AOYAMA, Tatsunari, Tokyo 130-8603 (JP); KAWANAGO, Hiroshi, Tokyo 130-8603 (JP); FUJIKI, Takashi, Tokyo 130-8603 (JP); YOSHIDA, Ryo, Tokyo 130-8603 (JP)
(74) Representative: Hoffmann Eitle
(86) International application number: PCT/JP2021/016886
(87) International publication number: WO 2022/230079

(57) **Abstract**

An electronic device comprises communication means capable of performing short-range wireless communication with an external communication device; operation means for accepting an operation; and control means for establishing connection to the communication device by controlling the communication means. When the communication means accepts a first input for starting connection to the communication device, the control means establishes connection to the communication device by the short-range wireless communication if an action state of the electronic device is a standby state, and the first input is an input that does not change the action state of the electronic device from the standby state to an operating state.

## Description

### TECHNICAL FIELD

The present invention relates to an electronic device and a method for controlling the electronic device.

### BACKGROUND ART

Recently, various electronic devices are given a communication function and capable of communicating with communication devices such as a smartphone. The use of a communication device can facilitate operations such as an operation of changing the setting of a small-sized electronic device in which the number of operation buttons and the positions thereof are strictly restricted.

A configuration in which communication between an electronic device and a communication device is established by using the operation of an operation member of the electronic device as a trigger is known (PTL 1). PTL 1 discloses a technique in which an electronic cigarette starts a Bluetooth^{®} connecting process when the switch of the electronic cigarette is turned on by receiving a user operation or connecting a catomizer to a control unit.

### CITATION LIST

### PATENT LITERATURE

PTL 1: Japanese Patent Laid-Open No. 2018-502564

### SUMMARY OF INVENTION

### TECHNICAL PROBLEM

In a case in which a communication connecting process is executed by using an operation on a member that is operated for a main intended use of an electronic device as a trigger, the electronic device tries to establish connection to a communication device whenever this operation is performed. For example, if a connecting process is executed in a device for generating aerosol by using, as a trigger, the operation of an opening/closing portion that is opened and closed for inhalation of aerosol, a connection with the communication device may be established against a user's will. Alternatively, the power consumption of the electronic device may be decreased because the communication process is executed whenever the operation is performed.

The present invention has been made in consideration of the above problem, and has as its object to implement a technique capable of preventing establishment of connection not intended by a user between an electronic device and an external communication device.

### SOLUTION TO PROBLEM

In one aspect, an electronic device comprising:
communication means capable of performing short-range wireless communication with an external communication device;
operation means for accepting an operation; and
control means for establishing connection to the communication device by controlling the communication means,
wherein when the communication means accepts a first input for starting connection to the communication device, the control means establishes connection to the communication device by the short-range wireless communication if an action state of the electronic device is a standby state, and
the first input is an input that does not change the action state of the electronic device from the standby state to an operating state, is provided.

The connection may be a connection for initially setting the short-range wireless communication.

The first input may be configured by a plurality of times of inputs to an operation member of the operation means, and the plurality of times of inputs may be configured by a predetermined specific operation pattern including short press and long press.

The operation means may include a slider that opens and closes an opening into which an aerosol source is inserted, and
the slider may be closed when the action state of the electronic device is the standby state.

When the operation means accepts the first input for starting connection to the communication device, the control means may establish connection to the communication device by the short-range wireless communication if a member detachable from a main body of the electronic device is attached to the main body.

When the detachable member is detached from the main body before the initial setting of the short-range wireless communication is completed, the control means may interrupt the initial setting.

When the operation means accepts the first input for starting connection to the communication device, the control means may establish connection to the communication device by the short-range wireless communication if a residual battery amount of the electronic device is not less than a predetermined value.

The control means may terminate the connection if a second input to the electronic device is not accepted for a predetermined time after the initial setting is completed.

The control means may interrupt the initial setting if the action state of the electronic device is changed before the initial setting is completed.

When a third input for changing the action state of the electronic device from the standby state to the operating state is accepted after the initial setting is completed in a first connection to the communication device by the short-range wireless communication, the control means may establish a second connection to the communication device by the short-range wireless communication.

The third input may be an operation of opening the slider.

The control means may receive information about setting of the electronic device from the communication device via the established second connection.

Information about setting of the electronic device may contain information of a control sequence for heating control to be controlled by the electronic device.

If the action state of the electronic device is one of a state in which heating means for generating aerosol is heated and a state in which the aerosol is generated, the control means may not receive information about setting of the electronic device from the communication device.

If a residual battery amount of the electronic device becomes less than a predetermined value after the second connection is established and before the slider is closed, the control means may transmit information about the residual battery amount of the electronic device to the communication device.

### ADVANTAGEOUS EFFECTS OF INVENTION

According to the present invention, it is possible to prevent establishment of connection not intended by a user between an electronic device and an external communication device when using the electronic device.

### BRIEF DESCRIPTION OF DRAWINGS

Fig. 1 is a view showing an example of the outer appearance of an aerosol generating device as an example of an electronic device according to an embodiment of the present invention;
Fig. 2 is a view for explaining an example of the outer appearance of the aerosol generating device shown in Fig. 1, that is, an example in which a tobacco stick is inserted into the aerosol generating device by opening a slide;
Fig. 3A is a block diagram showing an example of the functional configuration of the aerosol generating device;
Fig. 3B is a block diagram showing an example of the functional configuration of a communication device;
Fig. 4 is a view for explaining a state change of the aerosol generating device;
Fig. 5 is a flowchart showing a series of operations of a communication control process at the time of initial setting, which are executed in the aerosol generating device; and
Fig. 6 is a flowchart showing a series of operations of a communication control process at the time of normal connection, which are executed in the aerosol generating device.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### <Configuration of Aerosol Generating Device>

In the following explanation, an aerosol generating device capable of performing short-range wireless communication with a communication device will be explained as an example of an electronic device. However, the electronic device is not limited to the aerosol generating device and can include other electronic devices.

### (Outer Appearance of Aerosol Generating Device)

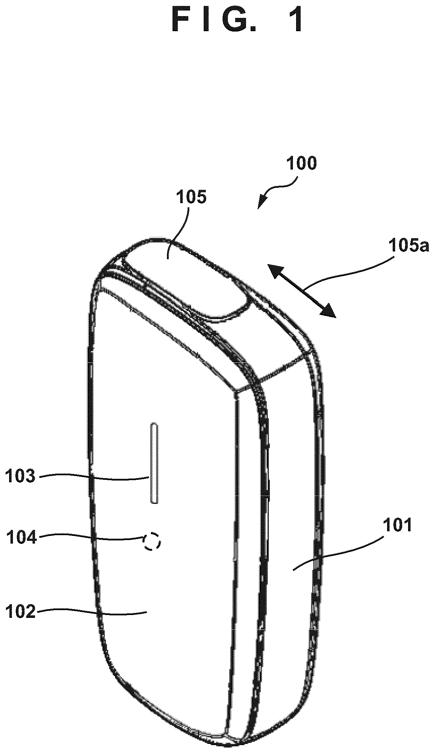

Fig. 1 shows an example of the outer appearance of an aerosol generating device 100 according to this embodiment. The aerosol generating device 100 includes, for example, a main body 101, a front panel 102, a display window 103, an operation member 104, and a slider 105.

The main body 101 is a housing having a predetermined shape, and internally supports, for example, one or more circuit boards of the aerosol generating device 100. The main body 101 has, for example, a substantially cuboidal rounded shape elongated in the vertical direction of Fig. 1. The size of the main body 101 can be a size which the user can grasp with one hand.

The front panel 102 is a flexible panel member covering the front surface of the main body 101. The front panel 102 is detachably connectable to the main body 101 by using a magnet or the like. The front panel 102 covers the operation member 104 for accepting a user input. The display window 103 is, for example, a band-like window extending along the longitudinal direction in substantially the center of the front panel 102. The display window 103 transmits light generated by one or more LEDs (Light-Emitting Diodes) arranged between the main body 101 and the front panel 102 to the outside.

The operation member 104 includes a physical button or the like and is disposed inside the front panel 102. When the user pushes a portion covering the operation member 104 via the front panel 102, the operation member 104 detects this user input and notifies a control unit 120 of the user input. Note that in this embodiment, a case in which the operation member 104 configured by a physical button is covered with the front panel 102 will be explained as an example. However, another configuration can also be used as long as a user operation can be accepted. For example, the operation member 104 can be an input device of any kind such as a touch-sensitive surface or a switch exposed from the front panel.

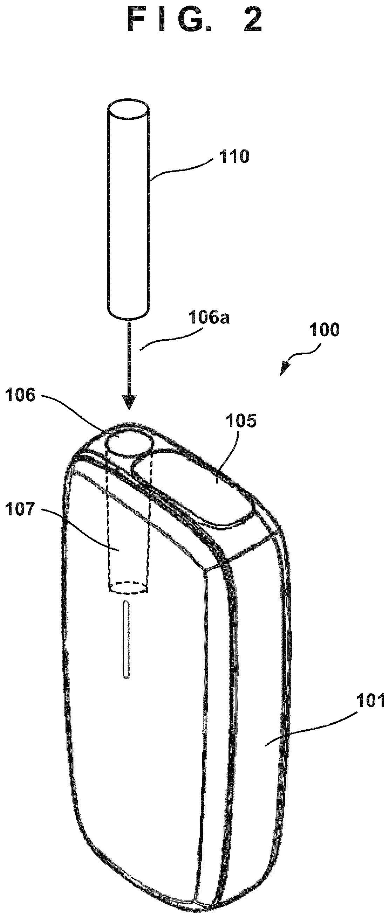

The slider 105 is a cover member slidably disposed along a direction 105a on the upper surface of the main body 101. The slider 105 is so configured as to open and close an opening for inserting an aerosol source. As shown in Fig. 2, for example, when the slider 105 slides to the near side (of the direction 105a in Fig. 1) (that is, when the slider 105 is set in an open state), the opening 106 in the upper surface of the main body 101 is exposed. When inhaling aerosol by using the aerosol generating device 100, the user inserts a tobacco stick 110 into the opening 106 exposed by opening the slider 105. The tobacco stick 110 is inserted into a tubular insertion hole 107 from the opening 106 along a direction 106a. A section perpendicular to the axial direction of the insertion hole 107 can be, for example, circular, elliptical, or polygonal, and can be formed such that the sectional area gradually reduces toward the bottom surface. In this configuration, the inner surface of the insertion hole 107 pushes the outer surface of the tobacco stick 110 inserted into the insertion hole 107, thereby preventing a fall of the tobacco stick 110 by the frictional force. When the user finishes inhaling aerosol, he or she pulls out the tobacco stick 110 from the insertion hole 107, and closes the slider 105 (the slider 105 is set in a closed state). Note that the aerosol generating device 100 is set in an operating state (to be described later) when the slider 105 is slid to the open state, and is set in a standby state (to be described later) when the slider 105 is slid to the closed state.

The tobacco stick 110 is a tobacco product holding a filler inside a cylindrical rolling paper. The filler of the tobacco stick 110 can be, for example, a mixture of an aerosol generating base and shredded tobacco. As the aerosol generating base, it is possible to use a base containing an aerosol source of any kind, such as glycerin, propylene glycol, triacetin, 1,3-butanediol, or a mixture thereof. The shredded tobacco is a so-called flavor source. The material of the shredded tobacco can be, for example, a lamina or a backbone. Note that a flavor source not originating from tobacco may also be used instead of the shredded tobacco.

### (Functional Configuration of Aerosol Generating Device)

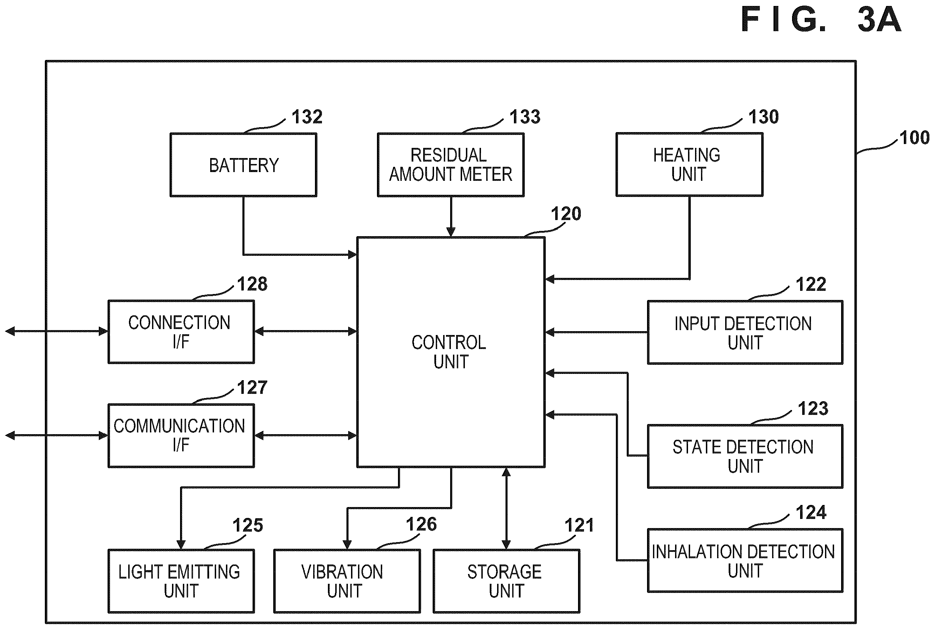

An example of the functional configuration of the aerosol generating device 100 will be explained below with reference to Fig. 3A. Note that individual functional blocks to be explained below can be either integrated or separated, and a function to be explained can be implemented by another block. Note also that a block to be explained as hardware can be implemented as software, and vice versa.

The aerosol generating device 100 includes, for example, the control unit 120, a storage unit 121, an input detection unit 122, a state detection unit 123, an inhalation detection unit 124, a light emitting unit 125, a vibration unit 126, a communication interface (I/F) 127, a connection I/F 128, a heating unit 130, and a battery 132.

The control unit 120 includes one or more processors and a volatile memory, and each processor can be a CPU (Central Processing Unit) or a microcontroller. The control unit 120 controls all functions of the aerosol generating device 100 by loading a computer program (also called software or firmware) stored in the storage unit 121 into the memory and executing the loaded program. The storage unit 121 can be a nonvolatile memory or the like. The storage unit 121 stores, for example, one or more computer programs, and data describing a heating profile as a control sequence defining the temporal transition of control conditions for controlling heating by the heating unit 130.

The control unit 120 controls communication (pairing or connection in a normal state) with an external communication device by performing a communication control process (to be described later). Also, the control unit 120 controls the state change (to be described later) of the aerosol generating device 100 in accordance with a user operation on the operation member 104 or the slider 105. When a user input for requesting the start of heating for generating aerosol is detected, the control unit 120 starts supplying electric power from the battery 132 to the heating unit 130. This user input can be, for example, long press of a button to be detected by the input detection unit 122. The control unit 120 can supply electric power from the buttery 132 to the heating unit 130. The control unit 120 controls the temperature of the heating unit 130 by adjusting the duty ratio of a control pulse by pulse width modulation (PWM). Note that the control unit 120 can also use pulse frequency modulation (PFM) instead of PWM.

The input detection unit 122 is a detection circuit for detecting a user input. The above-described operation member 104 can also function as the input detection unit 122. The input detection unit 122 detects a user operation performed by, for example, pushing on the front panel 102, and outputs an input signal indicating this user operation to the control unit 120. Note that the aerosol generating device 100 can also detect pushing itself on the front panel 102, instead of detecting pressing of the operation member 104.

The state detection unit 123 is a detection circuit for detecting the open/closed state of the slider 105, and includes a Hall element or the like. The state detection unit 123 outputs a state detection signal indicating whether the slider 105 is open or closed to the control unit 120. The state detection unit 123 can also be configured to detect an attached/detached state of the front panel 102. The state detection unit 123 can include another Hall element for detecting removal of the front panel 102, and can output a state detection signal indicating the attached/detached state of the front panel 102 to the control unit 120.

The inhalation detection unit 124 is a detection circuit for detecting inhalation (puff) of the tobacco stick 110 by the user. For example, the inhalation detection unit 124 can include a thermistor (not shown) disposed near the opening 106. In this case, the inhalation detection unit 124 can detect inhalation by the user based on a change in resistance value of the thermistor resulting from a temperature change caused by the inhalation. As another example, the inhalation detection unit 124 can include a pressure sensor (not shown) disposed on the bottom of the insertion hole 107. In this case, the inhalation detection unit 124 can detect inhalation based on a reduction in atmospheric pressure resulting from an air current caused by the inhalation. The inhalation detection unit 124 outputs, for example, an inhalation detection signal indicating whether inhalation is performed to the control unit 120.

The light emitting unit 125 includes one or more LEDs, and a driver for driving the LEDs. The light emitting unit 125 turns on each LED in accordance with an instruction signal input from the control unit 120. The vibration unit 126 includes a vibrator (e.g., an eccentric motor) and a driver for driving the vibrator. The vibration unit 126 vibrates the vibrator in accordance with an instruction signal input from the control unit 120. The control unit 120 can control at least one of the light emitting unit 125 and the vibration unit 126 by any pattern, in order to notify the user of a certain status (for example, the status of pairing) of the aerosol generating device 100. For example, the light emission patterns of the light emitting unit 125 can be distinguished by elements such as the light emission state (always on/blinking/off), the blinking period, and the light color of each LED. The vibration patterns of the vibration unit 126 can be distinguished by elements such as the vibration state (vibration/stop), the vibration pattern, and the vibration strength of the vibrator.

The communication I/F 127 includes, for example, a communication circuit and an antenna, and functions as a communication interface with which the aerosol generating device 100 wirelessly communicates with a communication device 200 (for example, a smartphone, a personal computer, or a tablet terminal owned by the user). The communication I/F 127 can be an interface complying with a wireless communication protocol, for example, short-range wireless communication such as Bluetooth^{®}, near-field wireless communication such as NFC (Near Field Communication), or a wireless LAN (Local Area Network).

The connection I/F 128 is a wired interface having a terminal for connecting the aerosol generating device 100 to another external device. The connection I/F 128 can be a chargeable interface such as a USB (Universal Serial Bus) interface. The connection I/F 128 can also be used to charge the battery 132 from an external power supply (via a feeder (not shown)).

The heating unit 130 can include a resistive heat generating part that generates aerosol by heating an aerosol source included in the aerosol generating base of the tobacco stick 110. As a resistive heat generating material of this resistive heat generating part, it is possible to use a mixture of one or more of copper, a nickel alloy, a chromium alloy, stainless steel, and platinum rhodium. The heating unit 130 is connected to the battery 132 by a wire (not shown).

The battery 132 is a power supply for supplying electric power to the heating unit 130 and other constituent elements of the aerosol generating device 100. Fig. 3A does not show feeders from the battery 132 to the constituent elements of the aerosol generating device 100. The battery 132 can be, for example, a lithium-ion battery. A booster circuit (DC/DC converter) 141 is a voltage conversion circuit for amplifying the voltage of the battery 132 in order to feed the heating unit 130. A residual amount meter 133 includes an IC chip for monitoring the residual power amount and other statuses of the battery 132. The residual amount meter 133 can periodically measure the status values of the battery 132, such as the SOC (State Of Charge), the SOH (State Of Health), the RSOC, and the power supply voltage, and can output the measurement results to the control unit 120.

### <Configuration of Communication Device>

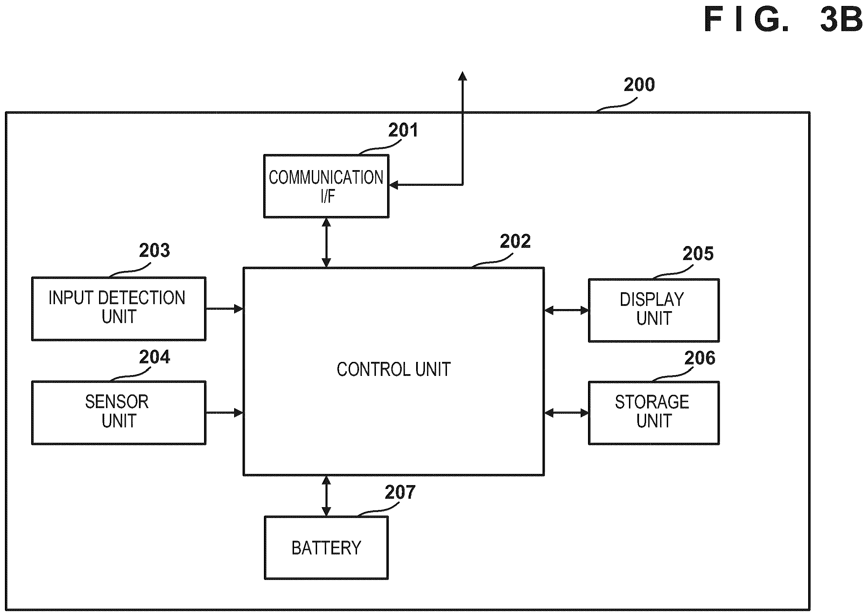

Next, a simplified configuration example of the communication device 200 will be explained with reference to Fig. 3B. The communication device 200 shown in Fig. 3B is a portable terminal such as a smartphone or a tablet terminal, but can also be a stationary terminal such as a personal computer. Note that individual functional blocks to be explained below can be either integrated or separated, and a function to be explained can be implemented by another block. Note also that a block to be explained as hardware can be implemented as software, and vice versa.

The communication device 200 includes, for example, a communication interface (I/F) 201, a control unit 202, an input detection unit 203, a sensor unit 204, a display unit 205, a storage unit 206, and a battery 207.

The communication I/F 201 includes a communication circuit or the like, and functions as a communication interface with which the communication device 200 wirelessly communicates with the aerosol generating device 100 or the like. The communication I/F 127 can be an interface complying with a wireless communication protocol, for example, short-range wireless communication such as Bluetooth^{®}, near-field wireless communication such as NFC (Near Field Communication), or a wireless LAN (Local Area Network). The communication I/F 201 can further include an interface complying with a mobile communication protocol such as LTE, and can connect to the Internet via mobile communication and exchange data with an external server.

The control unit 202 includes one or more processors and a volatile memory, and each processor can be a CPU (Central Processing Unit) or the like. The control unit 202 controls all functions of the communication device 200 by loading a computer program recorded in the storage unit 206 into the memory and executing the loaded program.

The input detection unit 203 includes a button and a touch panel of the communication device 200, and accepts operations for a setting screen for selecting or setting a heating profile of the aerosol generating device 100, and for GUIs for various kinds of operations. Note that the GUIs for various kinds of operations can include a GUI of a browser application for displaying information provided from a server on the network, and a GUI of another application. When accepting an operation of setting or changing the heating profile, the control unit 202 can transmit information of the heating profile to the aerosol generating device 100 via Bluetooth^{®}.

The sensor unit 204 includes, for example, a GPS for specifying the current position of the communication device 200, an image sensor for obtaining a still image or a moving image of the circumference of the communication device 200, and a biometric authentication sensor for specifying the user of the communication device 200.

The display unit 205 includes a display panel such as an LCD or an OLED, and displays GUIs for various kinds of operations in accordance with instructions from the control unit 202. For example, the display unit 205 displays the setting screen for selecting or setting the heating profile of the aerosol generating device 100 and the GUIs for various kinds of operations described above.

The storage unit 206 includes a nonvolatile memory such as a semiconductor memory, and stores set user information, computer programs such as applications to be executed by the control unit 202, and the like.

The battery 207 includes a lithium-ion battery or the like, and is a power supply for supplying electric power to each constituent element of the communication device 200. Fig. 3B does not show feeders from the battery 132 to the constituent elements of the communication device 200.

### <Examples of Action State of Aerosol Generating Device>

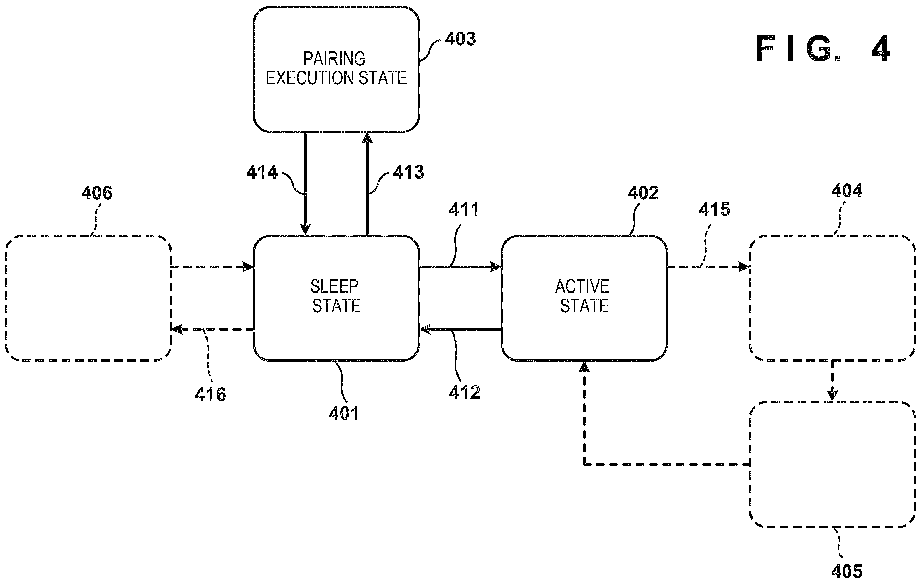

An example of the state change of the aerosol generating device 100 will be explained with reference to Fig. 4. The aerosol generating device 100 has several action states, and changes the state in accordance with a user input or the control by the control unit 120. The action states of the aerosol generating device 100 include, for example, a sleep state 401, an active state 402, and a pairing execution state 403. In addition, the action states of the aerosol generating device 100 can include one or more action states (for example, action states 404 and 405) that can be changed from the active state 402 as a starting point, and one or more action states (for example, an action state 406) that can be changed from the sleep state 401 as a starting point.

The sleep state 401 is a state in which the operation being performed by the control unit 120 is temporarily stopped and the control unit 120 is caused to wait in a power saving state in which the power consumption is decreased. When the sleep state is canceled, the operation can be resumed from the state before the stoppage. The control unit 120 can accept a predetermined user input and, upon receiving a corresponding user input, can change the state to a state (for example, the active state 402 or the pairing execution state 403) corresponding to the user input. Note that in the following explanation, the sleep state is also called a standby state in some cases. In this embodiment, the sleep state 401 can be started by a method of "suspend" or "standby" by which the standby state begins while the contents of the memory of the control unit 120 are maintained, and can also be started by a method of "hibernation" by which the standby state begins while the contents of the memory of the control unit 120 are copied to the storage unit 121.

In the sleep state 401 of the aerosol generating device 100, functions need not be operable except the function of detecting a user operation on the slider or the operation member 104, and the function of monitoring the residual battery amount.

The active state 402 is a state in which the functions of a device (for example, the aerosol generating device 100) are not restricted. For example, at least the heating function is not restricted in the aerosol generating device 100. Compared to the sleep state as the power saving state in which the power consumption is decreased, the active state can be a state in which the power saving state is canceled. Note that in the following explanation, the active state is also called an operating state in some cases.

In the aerosol generating device 100, for example, when the slider 105 is closed in the active state 402, the control unit 120 controls the action state from the active state 402 (the operating state) to the sleep state 401 (the standby state) (for example, 412 in Fig. 4). Also, when the slider 105 is opened in the sleep state 401 in the aerosol generating device 100, the control unit 120 controls the action state from the sleep state 401 (the standby state) to the active state 402 (the operating state) (for example, 411 in Fig. 4).

The pairing execution state 403 is a state for executing pairing of the communication device 200 and Bluetooth^{®}. When a predetermined operation on the operation member 104 is detected with the slider 105 being closed in the sleep state 401, the control unit 120 changes the state to the pairing execution state (for example, 413 in Fig. 4). If the pairing to the communication device 200 is successful, the control unit 120 registers the paired device in a white list held in the storage unit 121. If the registration to the white list is successful or the pairing is unsuccessful, the control unit 120 returns the action state from the pairing execution state 403 to the sleep state 401.

The control unit 120 can also change the action state to the state 404 for performing the heating function (for example, generating aerosol) (for example, 415 in Fig. 4), in accordance with a predetermined user operation in the active state 402, and can change the action state to the active state after that.

Alternatively, when a USB terminal is connected to the connection I/F 128, the control unit 120 can change the action state from the sleep state 401 to an action state (for example, 406) for performing charging (for example, 415 in Fig. 4).

### <Series of Operations of Communication Control Process When Pairing Is Initially Set>

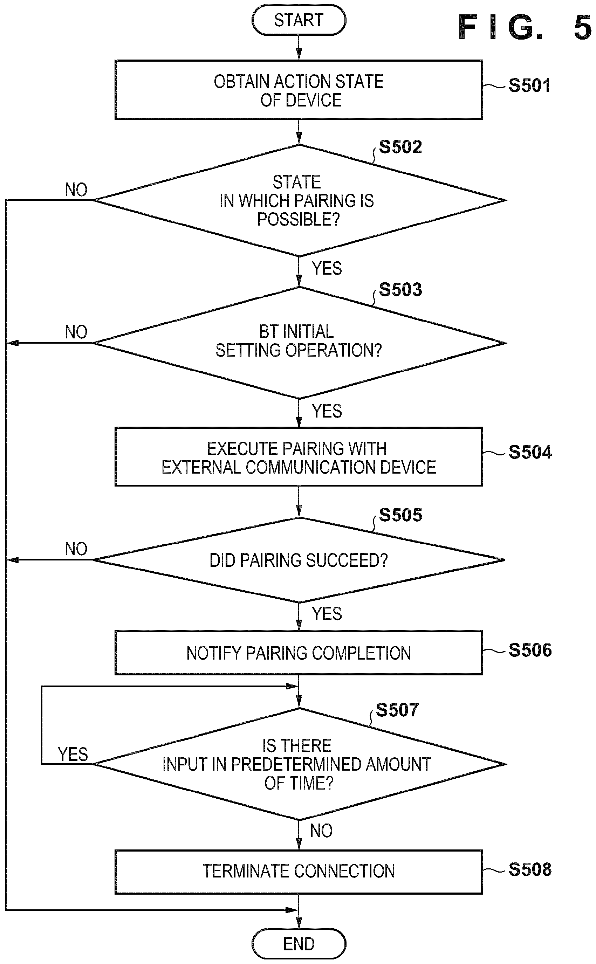

A series of operations of the communication control process to be executed in the aerosol generating device 100 when pairing is initially set will be explained below with reference to Fig. 5. Note that this process is implemented by the processor of the control unit 120 by executing a program stored in the storage unit 121. This process can also be started when a user operation is detected via the input detection unit 122 in a case in which the aerosol generating device 100 and the communication device 200 are placed at a short distance and the action state of the aerosol generating device 100 is the sleep state 401.

In S501, the control unit 120 acquires the action state of the aerosol generating device 100. For example, whenever the action state shown in Fig. 4 changes, the control unit 120 can store information indicating the action state of the device in the memory or the storage unit 121. When acquiring the action state, the control unit 120 can acquire the action state in which, for example, the aerosol generating device 100 is in the standby state, by referring to the information indicating the action state and stored in the memory or the storage unit 121.

In S502, the control unit 120 determines whether the action state of the aerosol generating device 100 is a state in which pairing is possible. For example, the control unit 120 determines whether the action state of the aerosol generating device 100 is the standby state. If the action state of the aerosol generating device 100 is the standby state, the control unit 120 determines that pairing is possible, and advances the process to S503; if not, the control unit 120 terminates the series of operations.

Note that the control unit 120 can also determine whether the front panel 102 is detached. If the action state is the standby state and the front panel 102 is not detached, the control unit 120 can determine that pairing is possible and advance the process to S503. By thus further considering attach/detach of the front panel, the aerosol generating device 100 used in an appropriate state can be paired with the communication device.

The control unit 120 can further determine whether the residual battery amount is equal to or larger than a predetermined threshold, based on a signal from the residual amount meter 133. That is, the control unit 120 can determine that pairing is possible, if the action state is the standby state, the front panel 102 is not detached, and the residual battery amount is equal to or larger than the predetermined threshold. By thus further considering the residual battery amount, it is possible to prevent deterioration of the quality of the user experience, for example, pairing fails because power shortage occurs during the pairing, or power shortage occurs when the user starts inhaling aerosol after the pairing.

In S503, the control unit 120 determines whether a user operation input via the input detection unit 122 is an operation for initially setting Bluetooth^{®} (that is, for starting pairing). For example, if input by the user operation is a plurality of times of input to the operation member 104 and configured by a predetermined specific operation pattern including long press and short press, the control unit 120 determines that the user operation is an operation for initial setting. Note that short press is an operation of pressing the operation member 104 for a time equal to or shorter than a predetermined time, and long press is an operation of pressing the operation member 104 for a time longer than the predetermined time. This specific operation pattern can be any pattern, and an example is a pattern including three times of short press and two-second long press after that. When the input by the user operation is configured by the specific operation pattern as described above, it is possible to prevent connection from being established when the user touches the operation member by mistake.

If the control unit 120 determines that the input is the operation for initial setting, the control unit 120 advances the process to S504; if not, the control unit 120 terminates the series of operations. Also, if the control unit 120 determines that the input is the operation for initial setting, the control unit 120 changes the action state of the aerosol generating device 100 to the pairing execution state, and updates the information indicating the action state.

In this embodiment as described above, when the action state of the aerosol generating device 100 is the standby state, an input that does not change the state of the device of the aerosol generating device 100 to the standby state (that is, an input to the operation member 104) is accepted. Consequently, the user can start pairing at an intended timing, and can prevent establishment of an unintended connection to a communication device. That is, when compared to a case in which connection is established to a communication device by using a slider opening operation as a trigger, the user can prevent pairing to another communication device at an unintended timing. It is also possible to prevent the power consumption of the aerosol generating device 100 from being decreased by unnecessarily performing pairing.

In S504, the control unit 120 executes pairing with the communication device 200 in accordance with, for example, the well-known protocol of Bluetooth^{®}.In this step, the control unit 120 can also turn on the LEDs of the light emitting unit 125 and notify the user that pairing is started and in progress. For example, the control unit 120 turns on eight LEDs of the light emitting unit 125 by a first pattern. The first pattern can be a pattern in which the LEDs are turned on one by one in order from one end to the other, and, when the other end is reached, the LEDs are turned on one by one in order from the other end to one end, that is, in the opposite direction. The communication device 200 can display, on the user interface of the display unit 205, information indicating the progress of pairing (for example, display indicating that a device to be paired is being searched for, or identification information of the found aerosol generating device 100).

In S505, the control unit 120 determines whether pairing is successful. For example, if pairing is unsuccessful and timeout occurs, if the communication device 200 notifies an error, or if long press of the operation member 104 (for canceling execution of pairing) is detected while pairing is executed, the control unit 120 determines that pairing is unsuccessful and terminates the series of operations. Alternatively, if the front panel 102 is removed, the control unit 120 can interrupt pairing and determine that pairing is unsuccessful. On the other hand, if pairing is successful, the control unit 120 advances the process to S506. Note that when terminating the processing in S505, the control unit 120 changes the action state of the aerosol generating device 100 to the standby state, and updates the information indicating the action state.

In S506, the control unit 120 notifies the completion of pairing. The control unit 120 can notify the user of the completion of pairing by, for example, turning on the LEDs of the light emitting unit 125 and causing the vibration unit 126 to generate vibration at the same time. For example, the control unit 120 turns on eight LEDs of the light emitting unit 125 by a second pattern. The second pattern can be a pattern in which all of the eight LEDs are simultaneously turned on. This allows the user to easily grasp that the pairing execution state is over and pairing is completed. The communication device 200 can also display information indicating the success of pairing on the display unit 205.

In S507, after pairing is complete, the control unit 120 measures the elapsed time by a timer or the like, and determines whether there is an input within a predetermined time. This input can include at least one of an operation of opening the slider 105, an operation on the operation member 104, and an information acquisition request from the communication device 200. The control unit 120 advances the process to S508 if there is no such input within the predetermined time, and returns the process to S507 if not.

Although not clearly indicated in the operation example shown in Fig. 5, if the operation of opening the slider 105 is detected in S507, the control unit 120 can change the action state to the active state 402 and perform a heating/inhaling process after that. In this case, a Bluetooth^{®} disconnecting process is performed in a communication control process in normal connection (to be described later).

As described above, the control unit 120 can complete the pairing process without requesting the user to input any explicit operation, by terminating the connection if there is no input within the predetermined time. On the other hand, if there is a user input, the control unit 120 can provide a device operation corresponding to the operation.

In S508, the control unit 120 disconnects Bluetooth^{®} from the communication device 200 and terminates the series of operations.

### <A Series of Operations of Communication Control Process in Normal Connection>

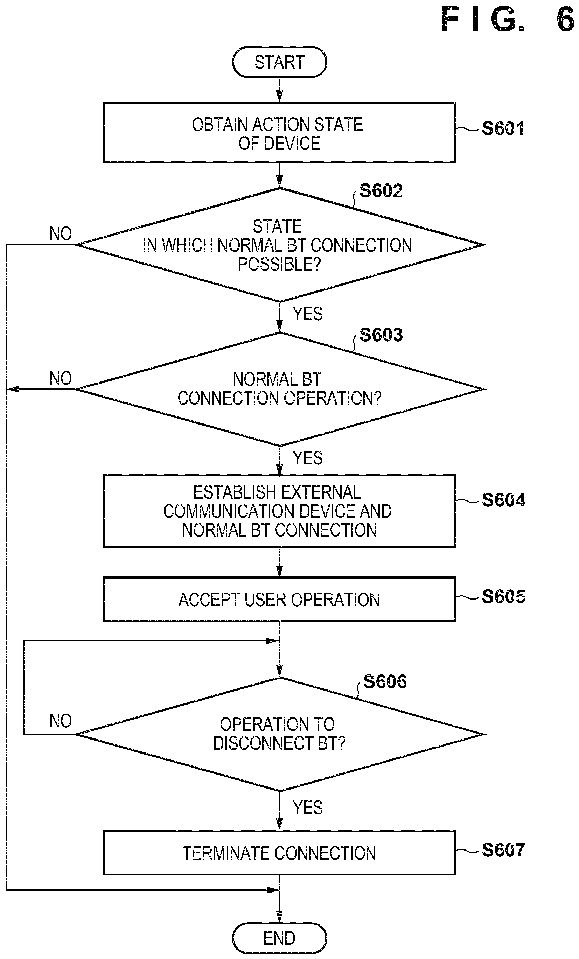

A series of operations of a communication control process to be executed in the aerosol generating device 100 in normal connection will be explained below with reference to Fig. 6. Note that this process is implemented by the processor of the control unit 120 by executing a program stored in the storage unit 121. Assume that the aerosol generating device 100 and the communication device 200 are completely paired and placed at a short distance. In this situation, this process can be started when a user operation is detected via the input detection unit 122 in a case in which the action state of the aerosol generating device 100 is the sleep state 401.

In S601, the control unit 120 acquires the action state of the aerosol generating device 100. For example, as in the processing in S501, the control unit 120 acquires the action state of the device by referring to information stored in the memory or the storage unit 121 and indicating the action state.

In S602, the control unit 120 determines whether the action state of the aerosol generating device 100 is a state in which normal connection of Bluetooth^{®} is possible. For example, the control unit 120 determines whether the front panel 102 is detached. The control unit 120 can advance the process to S603 if the front panel 102 is not detached, and can terminate the series of operations if not. The control unit 120 can further determine whether the residual battery amount is equal to or larger than a predetermined threshold, based on a signal from the residual amount meter 133, and can advance the process to S603 if the front panel 102 is not detached and the residual battery amount is equal to or larger than the predetermined threshold. Note that the processes in S601 and S602 are not essential and need not be executed.

In S603, the control unit 120 determines whether the user operation detected by the input detection unit 122 is an operation of normally connecting Bluetooth^{®}. For example, if an input by the user operation is an operation of opening the slider 105, the control unit 120 determines that the user operation is an operation for normal connection. The control unit 120 advances the process to S604 if the input is found to be the operation for normal connection, and terminates the series of operations if not. Note that if the input by the user operation is the operation of opening the slider 105, the control unit 120 changes the action state of the aerosol generating device 100 from the standby state (sleep state) to the operating state (active state), and updates the information indicating the action state. In the example of this step as described above, if the operation of opening the slider 105 is accepted while pairing to the communication device 200 is performed, normal connection to the communication device 200 is established in S604. However, the control unit 120 can also determine whether pairing to an external device is being performed. That is, the control unit 120 can determine whether pairing to an external device is being performed, and, if no pairing is being performed, can perform control such that the process of connecting Bluetooth^{®} to an external device is not performed even when the operation of opening the slider 105 is accepted. For example, when no device is registered in the white list, the control unit 120 can perform control so that the process of connecting Bluetooth^{®} is not performed. As another operation example, the control unit 120 can accept the operation of changing the action state of the aerosol generating device 100 from the standby state to the operating state (that is, the operation of opening the slider 105), and can advance to S604 and establish normal connection to the communication device 200 when the action state has changed from the standby state to the operating state. In this state, the control unit 120 can also determine whether pairing to an external device is being performed, when the action state has changed to the operating state. If no pairing is being performed (for example, if no external device is registered in the white list), the control unit 120 does not perform the process of connecting Bluetooth^{®}.

In S604, the control unit 120 establishes normal connection to the communication device 200 in accordance with the protocol of Bluetooth^{®}. For example, the control unit 120 can receive information about the setting of the aerosol generating device 100 from the communication device via the established normal connection. This information about the setting of the aerosol generating device 100 includes information of the heating profile in the aerosol generating device 100. However, if the action state of the aerosol generating device 100 is the state 404 for performing the heating function (for example, generating aerosol), the control unit 120 does not accept the information of the heating profile. As described above, even when the number and arrangement of the operation members of the aerosol generating device 100 are restricted by receiving the information of the heating profile from the communication device 200, the user can easily reflect the desired setting on the aerosol generating device 100. In addition, the safety of heating control can be maintained by restricting the acceptance of the setting of heating control when the aerosol generating device 100 is performing the heating function. Also, if the residual battery amount of the aerosol generating device 100 becomes smaller than a predetermined value after the connection is established, the control unit 120 can transmit information of the residual battery amount to the communication device 200. That is, the aerosol generating device 100 becomes able to notify the decrease of the residual battery amount via the communication device 200.

Note that the control unit 120 can perform the heating/inhaling process after the action state of the aerosol generating device 100 has changed to the operating state. Note also that, although not clearly shown in Fig. 6, if the user operation of opening the slider 105 is detected in S507 shown in Fig. 5 after pairing to Bluetooth^{®} is complete, the action state changes to the operating state, so the control unit 120 can execute the process from S605 in addition to the heating/inhaling process.

In S605, the control unit 120 accepts a user operation. This user operation is, for example, an operation of closing the slider 105. If the control unit 120 determines in S606 that the accepted user operation is an operation of disconnecting Bluetooth^{®}, the control unit 120 advances the process to S607; if not, the control unit 120 returns the process to S606. In S607, Bluetooth^{®} is disconnected. In this step, the control unit 120 changes the action state of the aerosol generating device 100 from the operating state to the standby state, and updates the information indicating the action state. After that, the control unit 120 terminates the series of operations.

In the abovementioned embodiment as has been explained above, the control unit 120 establishes connection by near-field wireless communication if the action state of the aerosol generating device 100 is the standby state and the first input for starting connection to the communication device 200 is accepted. In this case, the first input is an input that does not change the action state of the aerosol generating device 100 from the standby state to the operating state. This can prevent connection by near-field wireless communication from being established by using an operation that makes the aerosol generating device 100 usable as a trigger. That is, when using an electronic device, establishment of connection not intended by the user can be prevented between the electronic device and an external communication device.

In this embodiment, it is also possible to prevent the aerosol generating device 100 from being paired with an unintended device by applying control for near-field wireless communication to connection to be performed when initially setting (that is, pairing) Bluetooth^{®}.

The invention is not limited to the foregoing embodiments, and various variations/changes are possible within the spirit of the invention.

### REFERENCE SIGNS LIST

100...aerosol generating device, 200...communication device, 120...control unit, 127...communication I/F, 122...input detection unit, 123...state detection unit

## Claims

1. An electronic device comprising:
communication means capable of performing short-range wireless communication with an external communication device;
operation means for accepting an operation; and
control means for establishing connection to the communication device by controlling the communication means,
wherein when the communication means accepts a first input for starting connection to the communication device, the control means establishes connection to the communication device by the short-range wireless communication if an action state of the electronic device is a standby state, and
the first input is an input that does not change the action state of the electronic device from the standby state to an operating state.

2. The electronic device according to claim 1, wherein the connection is a connection for initially setting the short-range wireless communication.

3. The electronic device according to claim 2, wherein the first input is configured by a plurality of times of inputs to an operation member of the operation means, and the plurality of times of inputs are configured by a predetermined specific operation pattern including short press and long press.

4. The electronic device according to claim 3, wherein
the operation means includes a slider that opens and closes an opening into which an aerosol source is inserted, and
the slider is closed when the action state of the electronic device is the standby state.

5. The electronic device according to claim 4, wherein when the operation means accepts the first input for starting connection to the communication device, the control means establishes connection to the communication device by the short-range wireless communication if a member detachable from a main body of the electronic device is attached to the main body.

6. The electronic device according to claim 5, wherein when the detachable member is detached from the main body before the initial setting of the short-range wireless communication is completed, the control means interrupts the initial setting.

7. The electronic device according to any one of claims 4 to 6, wherein when the operation means accepts the first input for starting connection to the communication device, the control means establishes connection to the communication device by the short-range wireless communication if a residual battery amount of the electronic device is not less than a predetermined value.

8. The electronic device according to any one of claims 4 to 7, wherein the control means terminates the connection if a second input to the electronic device is not accepted for a predetermined time after the initial setting is completed.

9. The electronic device according to any one of claims 4 to 8, wherein the control means interrupts the initial setting if the action state of the electronic device is changed before the initial setting is completed.

10. The electronic device according to any one of claims 4 to 8, wherein when a third input for changing the action state of the electronic device from the standby state to the operating state is accepted after the initial setting is completed in a first connection to the communication device by the short-range wireless communication, the control means establishes a second connection to the communication device by the short-range wireless communication.

11. The electronic device according to claim 10, wherein the third input is an operation of opening the slider.

12. The electronic device according to claim 10 or 11, wherein the control means receives information about setting of the electronic device from the communication device via the established second connection.

13. The electronic device according to claim 12, wherein information about setting of the electronic device contains information of a control sequence for heating control to be controlled by the electronic device.

14. The electronic device according to claim 12 or 13, wherein if the action state of the electronic device is one of a state in which heating means for generating aerosol is heated and a state in which the aerosol is generated, the control means does not receive information about setting of the electronic device from the communication device.

15. The electronic device according to claim 11, wherein if a residual battery amount of the electronic device becomes less than a predetermined value after the second connection is established and before the slider is closed, the control means transmits information about the residual battery amount of the electronic device to the communication device.

16. A method for controlling an electronic device including communication means capable of performing short-range wireless communication with an external communication device, comprising the steps of;
accepting an operation; and
establishing connection to the communication device by controlling the communication means,
wherein the step of establishing the connection includes establishing connection to the communication device by the short-range wireless communication if an action state of the electronic device is a standby state when a first input for starting connection to the communication device is accepted in the step of accepting an operation, and
the first input is an input that does not change the action state of the electronic device from the standby state to an operating state.
